# EUROPEAN PATENT APPLICATION

(11) **EP 4 530 375 A1**
(43) Date of publication of application: **02.04.2025**
(21) Application number: 23200423.4
(22) Date of filing: 28.09.2023
(51) Int. Cl.: C25B 1/00, C25B 11/048, C25B 3/20, C25B 11/047, C25B 3/01, C25B 1/135, C01B 32/19, C25B 1/33, C25B 9/30, C25B 11/043, C25B 11/046, C25B 15/021, C25B 15/08, C25C 1/22, C25F 5/00, C25B 11/042, C25B 15/023, C25B 15/025, C25B 1/01, C25B 15/027, C25B 15/033

(54) **DEVICE AND METHOD FOR THE ELECTROCHEMICAL DISINTEGRATION OF A CONSUMABLE, TWO-DIMENSIONAL LAYERED SEMICONDUCTOR OR CONDUCTOR MATERIAL**

(71) Applicant: Sixonia Tech GmbH, 01187 Dresden (DE)
(72) Inventor: LOHE, Martin Rudolf, 01109 Dresden (DE); STUMMER, Hannes, 01109 Dresden (DE)
(74) Representative: Kailuweit & Uhlemann Patentanwälte Partnerschaft mbB

(57) **Abstract**

The present invention relates to a device and method for electrochemical disintegration of a consumable, two-dimensional layered semiconductor or conductor material comprising at least one electrolytic cell and a feeding system to transport the consumable, two-dimensional layered semiconductor or conductor material into an electrolyte.

## Description

The present invention relates to a device and method for electrochemical disintegration of a consumable, two-dimensional layered semiconductor or conductor material comprising at least one electrolytic cell and a feeding system to transport the consumable, two-dimensional layered semiconductor or conductor material into an electrolyte.

The isolation of individual layers of two-dimensional structured or layered semiconductor or conductor materials has been of interest for several years, not least because the use of these materials in electronic components leads to enormous increases in performance and efficient applications. An example of such an isolated layer of a two-dimensional structured or layered material is graphene, which represents a monolayer, i.e. a single atomic layer of graphite, a naturally occurring form of carbon. However, graphene also refers to material in which some of these monolayers are layered on top of one another. Graphene can be understood to be a two-dimensional network of chained benzene rings, which, among other things, has an enormous electrical conductivity. Due to its electronic, thermal, optical and mechanical properties, its use is of great interest in many fields of technology.

Graphene is partly produced under difficult process conditions using high-boiling solvents such as dimethylformamide and N-methyl-2-pyrrolidone.

Graphene can also be produced by reducing graphene oxide, produced for example by the so-called Hummers method (Hummers et al. 1958). Graphene oxide is excellently dispersible in a variety of solvents, especially water, which greatly facilitates implementation of an application on a larger scale. It is also redispersible after complete drying. However, the reduction methods have the disadvantage that oxide groups and other defects, such as holes or non-six-fold rings, remain within the material. These structural defects lead to severe restrictions on the electronic and thermal properties of the graphene produced from graphene oxide (Gómez-Navarro et al. 2007).

Alternatively, monolayers or thin layers of conductor materials such as graphene are produced by electrolytic exfoliation of a two-dimensional layered structured base material, such as graphite. Graphene layers as flakes have already been isolated from graphite as a base material in the solid state (for example, see Novoselov et al. 2011) or in the liquid phase (for example, see Xia et al. 2013).

The so-called liquid-phase exfoliation of graphite uses purely physical shear forces in primarily organic solvents and allows the production of graphene with significantly fewer defects than the synthesis from graphene oxide. Disadvantageously, however, this only results in low yields of exfoliated graphene and very small lateral layer sizes (Coleman 2013). In addition, the platelets tend to congregate (stack) again after the exfoliation. The use of surfactants or other additives to prevent this effect is inevitable. However, these additives are difficult to remove and significantly reduce the conductivity of the product.

Anodic exfoliation has recently established itself as a very promising method for producing high-quality graphene on a large scale, at low cost and in aqueous solution. The two-dimensional structured base material can be connected either as an anode in aqueous solutions of ionic liquids, mineral acids or inorganic salts. Under the influence of the electric current, electrons are separated from the two-dimensional structured base material, e.g. graphite, and leave a positive charge on the anode. The anions of the electrolyte can then easily be pushed between the individual layers of the base material, e.g. graphite, and separate them. However, graphene produced in this way has the disadvantage of high proportions of oxygen groups. This is due to oxygen radicals such as HO· or O·, which are formed during the production process by splitting water and add to the graphene layers (Rao et al. 2015).

In addition, the exfoliated layers stick back together after drying and it is difficult to redisperse them. One way to increase the dispersibility of the graphene layers is to functionalise the graphene layers with small molecules or polymers. Ejigu et al. describes the cathodic exfoliation of graphite in organic solvents and the simultaneous, in situ functionalisation of graphene layers with diazonium salts (Ejigu, et al. 2017). Diazonium salts generate free radicals and functionalise the surface through a reduction reaction at the cathode.

Chen et al. describe a method for producing highly crystalline graphene by electrolytic exfoliation in 0.65 M sulphuric acid with the addition of melamine in concentrations in the range of 10 to 200 g/100 ml electrolyte solution (Chen et al. 2015), wherein graphene layers are exfoliated from the graphite electrode and affected with melamine molecules. These protective layers applied in situ prevent further oxidation of the graphene layer and thus result in larger graphene crystallites. The remaining melamine is then washed off the collected graphene with water, which after drying shows a low defect density of oxygen defects.

Another possibility for producing functionalised graphene is the use of ionic liquids (Liu et al. 2008).

EP 3 732 315 A1 discloses a method for the preparation of a surfactant-free dispersion of functionalised semiconductor or conductor material from a two-dimensional layered structured carbon-based base material by electrolytic exfoliation, using an aqueous and/or alcoholic electrolyte solution containing sulphuric acid and/or at least one salt selected from sulphate and/or hydrogen sulphate and/or perchlorate and/or persulphate salt

EP 3 434 645 B1 describes a method of continuously preparing graphene oxide nanoplatelet comprising the steps providing a flexible graphite paper coil as a graphite raw material; and sequentially processing a two-step treatment of electrochemical intercalation in a first device and electrolytic oxidation exfoliation in a second device by driving the raw material by a feeding device, in particular a shaft roller type feeding device. A disadvantage of that arrangement is that the flexible graphite paper needs to be transported using rollers, to prevent any contact between the graphite paper and the counter electrode to prevent short circuiting. Hence, the intercalation and exfoliation step need to be performed in two separate devices and thus, the efficiency of the method is reduced.

The task is therefore to provide a method with increased efficiency and/or yield.

According to the invention, the task is solved by the device and the method according to the independent claims. Advantageous embodiments of the invention are indicated in the dependent claims.

A first aspect of the invention provides a device for electrochemical disintegration of a consumable, two-dimensional layered semiconductor or conductor material comprising:
i. at least one electrolytic cell comprising
   - at least one electrode pair consisting of at least a first and a second electrode, and
   - a vessel for an electrolyte solution,
ii. a power supply,
iii. a feeding system to transport a consumable, two-dimensional layered semiconductor or conductor material into the electrolyte comprising at least one mesh and/or belt,
wherein the first electrode is in contact with the consumable, two-dimensional layered semiconductor or conductor material,

wherein the second electrode is a counter electrode, which is arranged between the consumable, two-dimensional layered semiconductor or conductor material and at least one inner side of the vessel,
wherein the first electrode and the second electrode are connected to the power supply.

Advantageously, the device according to the invention enables the continuous electrochemical disintegration of a consumable, two-dimensional layered semiconductor or conductor material with increased efficiency or yield, respectively. Advantageously, according to the invention electrochemical disintegration of a consumable, two-dimensional layered semiconductor or conductor material is achieved in one step or in one device, respectively.

As used herein, the term "electrolytic cell" refers to an electrochemical cell that utilizes an external source of electrical energy to force a chemical reaction, in particular a voltage applied between at least two electrodes.

As used herein, the term "electrolyte solution" (also electrolyte) refers to a solution containing ions that is electrically conducting through the movement of those ions, but not conducting electrons.

As used herein, the term "feeding system" refers to a unit or a device for a continuous or discontinuous transport of a two-dimensional layered semiconductor or conductor material into and/or through a vessel for an electrolyte solution. Suitably, the movement of the feedings system, in particular the mesh and/or belt, preferably by a rotation of pulleys or drums, is used to draw the two-dimensional layered semiconductor or conductor material into the electrolyte.

As used herein, the term "consumable" refers to a material which is disintegrated by an electrolytic exfoliation.

As used herein, the term "two-dimensional layered material" refers to a material consisting of at least one layer of covalently bonded atoms of at least one element. In embodiments, the two-dimensional layered material comprises at least two layers of covalently bonded atoms of at least one element, wherein the layers are parallel or nearly parallel to each other.

As used herein, the term "conductor material" refers to a type of material that allows the flow of charges (electric current) in one or more directions, e.g., metals.

As used herein, the term "semiconductor material" refers to a type of material which has an electrical conductivity value falling between that of a conductor and an insulator (such as glass), e.g. Si, Ge, Se, α-Sn, B, Te, C (fullerene), GaP, GaAs, InP, InSb, InAs, GaSb, GaN, AIN or InN.

In embodiments, the semiconductor or conductor material is selected from graphene, graphene-derivatives, carbon-based semiconductor or conductor polymers and/or layered chalcogenides of the general formula MQ₂, wherein M is Ti, Zr, Hf, V, Nb, Ta, Mo or W and wherein Q is O, S, Se or Te.

In embodiments, the consumable, two-dimensional layered semiconductor or conductor material is selected from graphite, carbon-based two-dimensionally layered semiconductor or conductor polymers and/or layered chalcogenides. Graphite can be naturally occurring or synthetic graphite.

As used herein, the term "electrode pair" refers to a pair of at least one cathode and at least one anode.

In embodiments, the first electrode is connected as anode to the power supply and the second electrode is connected as cathode to the power supply.

As used herein, the term "anode" refers to an electrode of a polarized electrical device through which conventional current enters the device. An anode accepts electrons.

As used herein, the term "cathode" relates to an electrode of the device through which conventional current leaves the device. A cathode supplies electrons.

In embodiments, the first electrode is arranged in such a way that it comes not into contact with an electrolyte during the use of the device.

Suitably, the second electrode is arranged in such a way that it comes into contact with an electrolyte during the use of the device.

In embodiments, the second electrode is a non-consumable counter electrode.

In embodiments, the at least first and/or second electrode are non-consumable electrodes, preferably consisting of at least one metal or metal alloy, especially preferred consisting of platinum (Pt), gold (Au), silver (Ag), copper (Cu), aluminium (Al), titanium (Ti) or stainless steel. In embodiments, the at least first and/or second electrode are in the form of a foil, a plate, a sheet, a bar, a rod or a sponge.

In embodiments, the distance between the at least one electrode pair, in particular the distance between the first and second electrode, is in the range of 1 mm to 100 cm.

Suitably, the at least one electrode pair, in particular the first and second electrode, are arranged in any possible arrangement of two electrodes towards each other, preferably the electrodes are arranged in parallel or in an inclined manner to each other.

Suitably, in an inclined arrangement the distance between the electrodes is reduced in the direction of the bottom of the vessel. Advantageously, this arrangement counteracts the effect that the conductivity of the consumable, two-dimensional layered semiconductor or conductor material decreases due to the disintegration, in particular thinning and/or perforation.

In embodiments, the device further comprises at least one unit for collecting and/or separating electrochemically disintegrated semiconductor or conductor material from the electrolyte solution.

As used herein, the term "collecting and/or separation unit" is a unit or device for the separation of solid particles from a liquid solution. The collecting and/or separation unit can be any of filter, centrifuge or other device that is able to increase the particle concentration or separate particles of a suspension comprising particles of the electrochemically disintegrated semiconductor or conductor material and the electrolyte solution.

In embodiments, the collecting and/or separating unit is located inside or outside the vessel for the electrolyte solution.

In embodiments, the device comprises at least one unit for collecting and/or separating electrochemically disintegrated semiconductor or conductor material from the electrolyte solution inside the vessel for the electrolyte solution and at least one unit for collecting and/or separating electrochemically disintegrated semiconductor or conductor material from the electrolyte solution outside the vessel for the electrolyte solution.

In embodiments, the collecting and/or separating unit is selected from a filter and/or a centrifuge and/or a scraper, preferably a rotating screw; and/or a pump and/or an air nozzle.

Suitably, the filter and/or centrifuge and/or pump are located outside the vessel for the electrolyte solution. Suitably, the scraper, preferably a rotating screw; and/or air nozzle are located inside the vessel for the electrolyte solution.

In embodiments, the collecting and/or separation unit is at least one filter.

In embodiments, the device comprises at least one filter outside the vessel for the electrolyte solution and at least one scraper and at least one air nozzle inside the vessel for the electrolyte solution for collecting and/or separating electrochemically disintegrated semiconductor or conductor material from the electrolyte solution.

As used herein, the term "scraper" refers to an at least single-edged unit to scrape materials from a surface. In embodiments, the scraper is arranged in such a way that electrochemical disintegrated semiconductor or conductor material can be scraped together and thus transported from the surface of the electrolyte solution or from the bottom of the vessel towards an outlet of the vessel. Suitably, the scraper can be a rotating screw, preferably at the bottom of the vessel.

In embodiments, the air nozzle is directed on the top of the electrolyte solution to promote movement of floating particles to the edge of the vessel, in particular to an overflow. Advantageously, the air nozzle prevents accumulation of electrochemical disintegrated semiconductor or conductor material on the surface of the electrolyte solution leading to potential short circuits between the semiconductor or conductor material and counter electrodes.

In embodiments, the device comprises at least three units for separating electrochemical disintegrated semiconductor or conductor material from the electrolyte solution, preferably selected from a filter, a scraper and an air nozzle.

In embodiments, the device further comprises at least one further separation unit for washing electrochemically disintegrated semiconductor or conductor material (washing unit). Suitably, the washing unit is used to remove the electrolyte solution from the electrochemically disintegrated semiconductor or conductor material and/or exchange the solvent of a suspension of the electrochemically disintegrated semiconductor or conductor material, e.g. with an aqueous solution and/or an organic solvent.

In embodiments, the washing unit is selected from a filter or centrifuge.

In embodiments, the device further comprises at least one "processing unit".

As used herein, the term "processing unit" refers to an unit processing the electrochemically disintegrated semiconductor or conductor material to a liquid formulation, in particular a suspension, preferably an ink, paint, paste, slurry, sludge; and/or a solid formulation, in particular a powder, pellets or tablets.

As used herein, the term "suspension" refers to a heterogeneous mixture of a liquid, that contains solid particles.

As used herein, the term "ink" or "paint" refers to a suspension comprising the electrochemically disintegrated semiconductor or conductor material, and that is used to coat a surface.

As used herein, the term "paste" refers to a solid-liquid mixture (suspension) with a high solids content.

As used herein, the term "slurry" refers to a solid-liquid mixture (suspension) of denser solids suspended in at least one liquid, in particular water. As used herein, the term "sludge" refers to a semi-solid slurry.

In embodiments, the processing unit is a device applying shear forces to the electrochemically disintegrated semiconductor or conductor material.

In embodiments, the processing unit comprises an ultrasound processor. Suitably, the ultrasound processor is used to disperse the electrochemically disintegrated semiconductor or conductor material to a dispersion with low viscosity (typically in the range of 10⁻⁴ to 10⁰ Pa·s), in particular an ink. In embodiments, the processing unit further comprises at least one separating unit, in particular a centrifuge and/or a belt filter. Suitably, the separating unit, in particular a centrifuge and/or a belt filter, is used to separate poorly dispersed particles from a dispersion.

In embodiments, the processing unit comprises a high-shear mixer, in particular a dissolver, a rotor-stator-mixer, a high-pressure liquid jet micronizer (wet-jet mill), a two- or three-roll mill and/or a kneader. Suitably, the high-shear mixer is used to disperse the electrochemically disintegrated semiconductor or conductor material to a homogeneous dispersion with a high viscosity (typically in the range of 10⁻⁴ to 10³ Pa·s), in particular a homogeneous ink, paint, paste or slurry.

In embodiments, the processing unit comprises a drying device, in particular a filter-press, a drying rack, an air-knife dryer, a belt dryer, a drying cabinet, a vacuum dryer, a dehumidifier, a fluidized-bed dryer, a freeze-dryer and/or a supercritical point dryer.

Suitably, the drying device is used to process the electrochemically disintegrated semiconductor or conductor material to a solid formulation.

In embodiments the device further comprises at least one waste-treatment unit. Suitably, the waste-treatment unit is used to treat waste products generated in the device during its operation, in particular spent or excess electrolyte solutions, liquids or solids from the washing and/or purification process, in particular the supernatant or sediments from the centrifugation and/or condensation products from drying procedures. Advantageously, the waste-treatment unit can be used to recycle or regenerate waste products to educts, in particular water or other liquids, e.g. electrolyte solution or solvents that can be reused during the operation of the device Further advantageously, by recycling or regenerating waste products a circular material stream is enabled to increase the overall efficiency of the device and reduce operational costs, waste and therefor minimize the potential environmental impact.

In embodiments, the waste-treatment unit comprises at least one separating unit, in particular a filter or a centrifuge. In embodiments, the waste-treatment unit comprises at least one adsorption unit, in particular a filtration column, preferably an activated carbon column.

In embodiments the device further comprises at least one storage unit for the storage of educt, in particular the consumable, two-dimensional layered semiconductor or conductor material; raw materials, in particular electrolyte components; or waste materials.

In embodiments, the vessel for the electrolyte solution comprises at least one inlet and at least one outlet, wherein the outlet is connected to the inlet by at least one connecting element and wherein a separation device is located between the outlet and the inlet. Advantageously, the electrolyte solution can be reused in the system after the disintegrated semiconductor or conductor material was separated from the electrolyte solution.

In embodiments, at least one outlet of the vessel is set up as an overflow and/or located at the side or bottom of the vessel.

As used herein, the term "overflow" refers to a recess on the top edge of the vessel.

Advantageously, an overflow ensures the drainage of the electrolyte solution above a certain height level and/or prevents accumulation of electrochemical disintegrated semiconductor or conductor material on the surface of the electrolyte solution leading to potential short circuits between the semiconductor or conductor material and counter electrodes.

As used herein, the term "mesh" (also web or net) refers to a barrier unit made of connected strands of fiber or other flexible materials. Advantageously, the mesh is permeable and allows for the passage of ions. In embodiments, the mesh is impermeable for particles larger than 1 µm. Advantageously, the mesh prevents the accumulation of particles between the consumable, two-dimensional layered semiconductor or conductor material and the counter electrode(s) in the electrolyte-containing vessel and thus minimizes the risk of a short circuit.

Suitably, the size of the mesh is chosen depending on the size of the consumable, two-dimensional layered semiconductor or conductor material.

In embodiments, the mesh comprises pores or holes, in particular spaced pores or holes, with a diameter in the range of 1 µm to 20 cm, preferably in the range of 10 µm to 10 cm, most preferably in the range of 50 µm to 5 cm.

As used herein, the term "belt" refers to a conveyor belt comprising at least two pulleys (also drums), with a closed loop of the carrying belt that rotates about them.

Suitably, the mesh or belt is made of a mechanically and chemically stable, electrically non-conductive material.

In embodiments, the mesh or belt is made of polyethylene or polypropylene.

In embodiments, the feeding system is arranged in such a way that the mesh or belt are at least partially in contact with the consumable, two-dimensional layered semiconductor or conductor material.

In embodiments, the feeding system comprises at least two meshes, wherein the pores or holes of the meshes are offset to each other.

In embodiments, the feeding system comprises at least two mesh-like, non-conductive belts placed on both sides of the consumable, two-dimensional layered semiconductor or conductor material, which is arranged at least partially in the vessel in such a way that it is at least partially surrounded by the electrolyte solution.

In embodiments, the feeding system comprises at least two mesh-like, non-conductive belts placed on both sides of the consumable, two-dimensional layered semiconductor or conductor material which is arranged completely in the vessel in such a way that it is completely surrounded by the electrolyte solution.

In embodiments, the mesh or belt is driven by a motor and/or operated by a process control.

In embodiments, the electrolytic cell comprises a further counter electrode (third electrode), wherein the consumable, two-dimensional layered semiconductor or conductor material is arranged between the two counter electrodes.

In embodiments, the electrolytic cell comprises at least two electrode pairs in parallel. In embodiments, the electrolytic cell comprises multiple electrode pairs in parallel.

In embodiments, the device further comprises at least one cooling unit, wherein the cooling unit is arranged in or connected to the at least one first electrode and/or the at least one second electrode and/or the vessel for the electrolyte solution and/or between the at least one inlet and at least one outlet of the vessel.

As used herein, the term "cooling unit is arranged in at least one first and/or second electrode" refers to an electrode which is designed in such a way that coolant can flow through it.

As used herein, the term "cooling unit is arranged in the vessel for the electrolyte solution" refers to a vessel which is designed in such a way that coolant can flow through at least one of its walls which is/are in contact with the electrolyte. In embodiments, the vessel for the electrolyte solution is a double walled vessel and is connected to a cooling system.

In embodiments, the electrolytic cell comprises at least two, in particular multiple, electrode pairs in parallel, wherein a cooling unit is arranged in each of the at least one electrode(s).

In embodiments, the device further comprises at least one sensor for monitoring at least one process parameter, preferably selected from temperature, conductivity, current, voltage and/or UV/Vis absorption.

In embodiments, the sensor for monitoring the temperature is a temperature sensor and a temperature controller. Suitably, the temperature sensor is used for measuring and/or controlling the electrolyte temperature in the vessel, for monitoring and/or controlling the cooling water temperature, in particular at the inlet and/or outlet of the vessel.

The term "temperature controller" is understood to mean elements that use a sensor to detect the actual value of the temperature and compare this with the setpoint value, whereby the desired temperature can be entered via an actuator.

In preferred embodiments, the sensor for monitoring the temperature is a thermometer for contact measurements with a thermistor or a thermocouple or a contactless IR thermometer.

As used herein, the term "conductivity sensor" refers to a sensor measuring the ion content of an aqueous solution using electrical conductivity. Suitably, the conductivity sensor is used for monitoring the electrolyte conductivity in the vessel, monitoring the conductivity of the wash solution, in particular as a quality criterion at the input of the vessel and/or as an indicator of the efficiency of the washing process.

In embodiments, the sensor for monitoring the conductivity is a 2-pole or 4-pole conductivity cell, preferably made of graphite or platinum. In embodiments, the conductivity sensor comprises a chemically resistant glass body.

In embodiments, the sensor for monitoring the conductivity measures the conductivity contactless, in particular using an eddy current sensor. Suitably, the contactless conductivity sensor is used to determine the solid content of the filtered or washed material during and/or after the washing process.

In further embodiments, the conductivity sensor comprises an integrated temperature sensor.

As used herein, the term "current sensor" refers to a sensor measuring the electric current. Suitably, the current sensor is used to measure the current that flows into the exfoliation system as a control variable for the exfoliation speed. In embodiments, the sensor for monitoring the current is selected from a shunt resistor, current transformer, Rogowski cell and magnetic-field based transducer.

Aus used herein, the term "voltage sensor" refers to a sensor measuring the voltage in transmission lines and/or electronic circuits. Suitably, the voltage sensor is used to measure and/or adjust the voltage at the power supply, as the voltage between the consumable electrode (two-dimensional layered semiconductor or conductor material) and the counter electrode(s) influences the quality of the electrochemical disintegrated semiconductor or conductor material. In embodiments, the sensor for monitoring the voltage is a voltage transducer.

As used herein, the term "UV/Vis sensor" refers to a sensor measuring the absorption or reflectance of at least a part of the ultraviolet and/or the visible regions of the electromagnetic spectrum in a sample, in particular the intensity of light after passing through a sample. Suitably, the UV-VIS sensor is used to monitor the electrolyte and/or washing solution, in particular to monitor the efficiency of the washing process.

In embodiments, the sensor for monitoring the UV/Vis absorption is a UV/Vis probe, preferably rod-shaped probe with a hydrophobic coating, in particular silicone or a fluorinated polymer. In embodiments, the light emission source of the UV/Vis sensor is a laser, a diode, an incandescent lamp or a fluorescent tube.

In further embodiments, the UV/Vis sensor comprises an integrated temperature sensor.

In embodiments, the device further comprises at least one sensor for monitoring at least onegas, in particular hydrogen, oxygen, carbon monoxide and/or carbon dioxide. Suitably, the hydrogen sensor measures the hydrogen concentration and controls the power supply ensuring that no hazardous hydrogen concentrations are reached. Suitably, the carbon monoxide and/or carbon dioxide sensor measures the carbon monoxide and/or carbon dioxide in the air, ensuring a harmless working environment.

In embodiments, the device further comprises at least one flow sensors, in particular a liquid or gas flow sensor. Suitably, the liquid flow sensor measures and/or regulates the cooling water amount, the electrolyte amount, washing solution amount and/or solvent exchange, in particular ensuring that no blockages occur. Suitably, the gas flow sensor measures and/or controls the exhaust gas flow, in particular preventing dangerous gas concentrations.

In embodiments, the device further comprises at least one leak sensors. Suitably, the leak sensor is used to monitor malfunctions, in particular leaks and/or spilling.

In embodiments, the device further comprises an automated, electrolyte re-dosing unit and/or at least one quantity sensor. Suitably, the quantity sensor, in particular a scale, level sensor for the vessel or storage vessel; is used to measure the electrolyte production, addition, consumption and/or re-dosing and/or the addition, consumption and/or re-filling of the consumable, two-dimensional layered semiconductor or conductor material.

In embodiments, the device further comprises at least one camera. Suitably, the camera is used to enable remote diagnosis in the event of malfunctions. In embodiments, the camera is attached to a moveable unit to be able to view different areas.

In embodiments, the moveable unit comprises a device for positioning in three-dimensional space. In embodiments, the device for positioning in three-dimensional space is designed as a robot arm, delta robot, multi-axis system or hexapod.

In embodiments, the device for positioning in three-dimensional space is designed as a combination of robot arm, delta robot or hexapod. This means that the moveable unit can be positioned as required, with the system being moved in the X-Y direction by means of a hexapod and positioning in the Z direction by the robot arm, for example.

In embodiments, the device for positioning in three-dimensional space is designed with combinations of axes, linear drives and/or rotary drives, the mode of operation and degrees of freedom of which are coordinated with one another in such a way that they allow the positioning of the moveable unit in X, Y - and Z direction with the required precision and speed. Suitably, the information about the X direction, Y direction and Z direction refer to the axes of a Cartesian coordinate system.

In embodiments, the device further comprises at least one dosing system for redosing of electrolyte or adjustment of electrolyte composition.

In embodiments, the device further comprises at least one collecting cover and/or an exhaust device. Suitably, the collecting cover almost completely covers the vessel. In embodiments, the collecting cover is segmented, comprising a segment which covers the at least one first electrode and/or the feeding system transporting the consumable, two-dimensional layered semiconductor or conductor material into the electrolyte and a segment which covers the at least one second electrode. Advantageously, the at least one collecting cover and/or an exhaust device are able to collect gases produced at the anode and cathode (e.g. oxygen or hydrogen), preferably separated.

In embodiments, the collecting cover and/or an exhaust device is connected to a waste-treatment unit. Suitably, the waste-treatment unit is used to treat gases collected in the collecting cover and/or exhaust device. Such gaseous by-products and waste gases include hydrogen and oxygen.

In embodiments, the waste-treatment unit, in particular a palladium membrane and/or an activated carbon column, purifies the gases. In embodiments, the system comprises at least one fuel cell. Suitably, the purified gases are fed into the fuel cell to generate electricity, which in turn is used to operate at least partially the device and reduce its overall electricity consumption.

In embodiments, the device is surrounded by one housing, e.g. a shipping container.

In embodiments, the housing comprises at least one connection for the supply with electrical energy ,at least one inlet for air and an outlet for exhaust gases, at least one line for an electrolyte solution, water and/or other liquids and/or at least one output for disintegrated semiconductor or conductor material and/or waste materials, e.g. spent or excess electrolyte solution, liquids or solids from the washing and/or purification process, in particular the supernatant or sediments from the centrifugation and/or condensation products from drying procedures.

In embodiments, the housing is equipped with solar panels and/or a wind turbine. Suitably, the solar panels and/or a wind turbine can supply electrical energy to the device.

In embodiments, the housing is equipped with access ports or connections to manually refill raw materials or remove waste products.

In embodiments, the device comprises at least one further moveable unit for replacing a finished roll of consumable, two-dimensional layered semiconductor or conductor material and/or transport a consumable, two-dimensional layered semiconductor or conductor material to the feeding system, in particular an actuator or a robotic system.

As used herein, the term "actuator" refers to a device that creates movement by converting energy and signals supplied to the system, in particular a linear or rotational movement.

In embodiments, the moveable unit comprises a device for positioning in three-dimensional space designed as a robot arm, delta robot, multi-axis system or hexapod.

In embodiments, the device for positioning in three-dimensional space is designed as a combination of robot arm, delta robot or hexapod. In embodiments, the device for positioning in three-dimensional space is designed with combinations of axes, linear drives and/or rotary drives, the mode of operation and degrees of freedom of which are coordinated with one another in such a way that they allow the positioning of the moveable unit in X, Y and Z direction with the required precision and speed.

In embodiments, the at least one actuator and/or robotic system is operated and/or controlled by a control unit or manually by an operator.

In embodiments, the device further comprises a control unit comprising a processor configured so that the processor
- regulates the power supply, in particular the voltage and/or current between the at least one first and second electrode,
- the speed of the transport of the consumable, two-dimensional layered semiconductor or conductor material into the electrolyte solution by the feeding system, and/or
- supply and outlet of electrolyte solution.

Any program-controlled data processing device is considered a control unit. In embodiments, the control unit has one or more components in the form of hardware and/or one or more components in the form of software. In embodiments, the control unit includes a cloud computing system, a computer network, a computer, a tablet computer, a smartphone, or combinations thereof.

In embodiments, hardware interacts with software and/or is configurable using software. The software is expediently executed using the hardware. In embodiments, the hardware is a memory system, a field-programmable gate array (FPGA) system, an application-specific integrated circuit (ASIC) system, a microcontroller system, a processor system, or a combination thereof.

In embodiments, the control unit calculates a voltage between the at least one first and second electrode and/or a speed of the transport of the consumable, two-dimensional layered semiconductor or conductor material into the electrolyte solution based on the measured conductivity, current or voltage and calibration values stored in the processor.

Advantageously, the device can operate autonomously using a control unit that is monitoring and processing the sensor inputs and/or controlling and/or continuously adjusting the feed-rates of raw materials and other media.

In embodiments the device, in particular the control unit is connected to the internet and can be accessed, operated and maintained remotely.

Another aspect of the invention is a method for electrochemical disintegration of a consumable, two-dimensional layered semiconductor or conductor material comprising:
a) electrolytic exfoliation of a consumable, two-dimensional layered semiconductor or conductor material in an electrolytic cell comprising
   - at least one electrode pair consisting of at least a first and a second electrode, and
   - a vessel for an electrolyte solution,

   by bringing at least one second electrode and the consumable, two-dimensional layered semiconductor or conductor material into contact with the electrolyte solution and applying a voltage between the at least one first and second electrode using a power supply,
   wherein the first electrode is in contact with the consumable, two-dimensional layered semiconductor or conductor material,
   wherein the second electrode is a counter electrode, which is arranged between the consumable, two-dimensional layered semiconductor or conductor material and at least one inner side of the vessel for the electrolyte solution,
   wherein the first electrode and the second electrode are connected to the power supply,
b) continuous or discontinuous transport of the consumable, two-dimensional layered semiconductor or conductor material into the electrolyte solution using a feeding system comprising at least one mesh and/or belt,
c) separating the disintegrated semiconductor or conductor material from the electrolyte solution.

In embodiments, the consumable, two-dimensional layered semiconductor or conductor material is a carbon-based material, preferably selected from graphite, graphite derivatives, carbon-based semiconductor or conductor polymers.

Suitably, the consumable, two-dimensional layered semiconductor or conductor material is in the form of foils, sheets or a mixture thereof.

Preferably, the consumable, two-dimensional layered semiconductor or conductor material is a graphite foil.

In embodiments, the electrolyte solution is an aqueous solution. In embodiments, the electrolyte solution contains at least one polar organic solvent, for example propylene carbonate or acetonitrile.

In embodiments, the electrolyte solution comprises at least one dissolved salt or at least one dissolved salt and sulphuric acid, wherein the at least one salt is selected from a sulfate, a hydrogen sulfate, a persulfate and/or a perchlorate salt.

In embodiments, at the beginning of the electrolytic exfoliation in step a), the first and second electrode is periodically reversed. The polarity is reversed by applying an alternating voltage between the first and second electrode.

In embodiments, the voltage in step a) is in the range of 1 V to 20 V. In embodiments, the voltage is in the range of +/- 2 V to +/-20 V, preferably in the range of +/- 5 V to +/- 15 V.

In embodiments, the transport of the consumable, two-dimensional layered semiconductor or conductor material into the electrolyte solution in step b) is carried out by applying a constant speed or by maintaining a constant current, at a possibly varying rate, preferably a constant current.

In embodiments, the transport of the consumable, two-dimensional layered semiconductor or conductor material into the electrolyte solution in step b) is carried out with a feed ratedepending on thickness of the consumable, two-dimensional layered semiconductor or conductor material and the applied current. In embodiments, the transport of the consumable, two-dimensional layered semiconductor or conductor material into the electrolyte solution in step b) is carried out with a feed rate in the range of 0,1 mm/min to 10 cm/min.

In embodiments, the method further comprises the washing, processing and/or drying of the disintegrated semiconductor or conductor material.

In embodiments, the method, in particular step a) and/or step b) is operated manually by an operator on site.

In embodiments, step a) and/or step b) are regulated by a control unit.

Also included is a computer program product comprising instructions which, when the program is executed by a computer, cause it to carry out steps a) and/or b) of the method.

In embodiments, the computer program product is designed to be loadable into a processor of the control unit.

The invention is not limited to the specifically described combinations of features but may also be defined by any other combination of specific features of all the individual features disclosed as a whole, provided that the individual features are not mutually exclusive, or a specific combination of individual features is not explicitly excluded.

The project leading to this application has received funding from the European Union's 2020 research and innovation programme under grant agreement No. 649953.

In the following, the invention will be explained in more detail by means of an example. The example is intended to describe the invention without limiting it.

Implementations of the invention will be described, by way of example only, with reference to accompanying drawings in which:

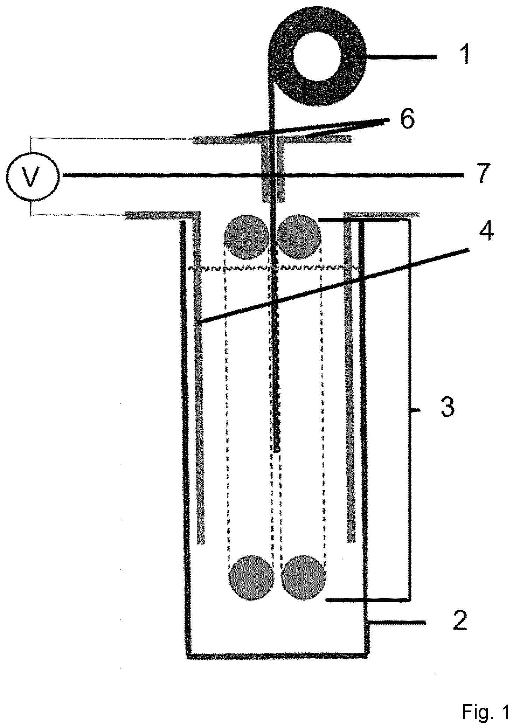

- **Fig. 1**: shows a system according to the invention from the side view (narrow side). The consumable, two-dimensional layered semiconductor or conductor material **1,** in particular graphite foil, is transported by the feeding system **3,** in particular mesh or belt, in the vessel for an electrolyte solution **2,** wherein an electrode pair **4** consisting of at least a first and a second electrode are connected to the power supply **7.** The first electrode is in contact with the consumable, two-dimensional layered semiconductor or conductor material **1** by a sliding contact **6** and not in contact with the electrolyte solution, and the second electrode is a non-consumable counter electrode, which is arranged between the consumable, two-dimensional layered semiconductor or conductor material **1** and at least one inner side of the vessel **2.**

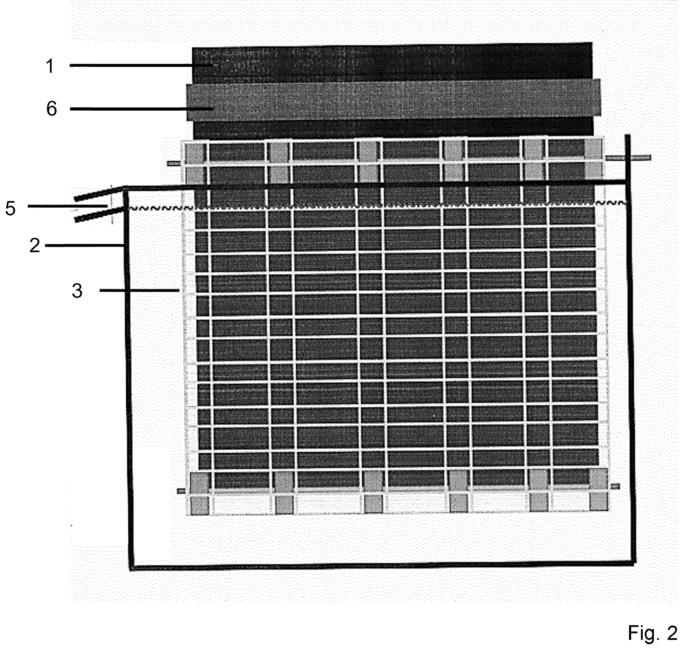

- **Fig. 2**: shows a system according to the invention from the side view (longitudinal side). The consumable, two-dimensional layered semiconductor or conductor material **1,** in particular graphite foil, is transported by the feeding system **3,** in particular mesh or belt, in the vessel for an electrolyte solution **2.** The first electrode is in contact with the consumable, two-dimensional layered semiconductor or conductor material **1** by a sliding contact **6** and not in contact with the electrolyte solution, and the second electrode is a non-consumable counter electrode, which is arranged between the consumable, two-dimensional layered semiconductor or conductor material **1** and at least one inner side of the vessel **2.** After electrolysis of the consumable, two-dimensional layered semiconductor or conductor material **1,** in particular graphite foil, electrochemical disintegrated semiconductor or conductor material on the surface of the electrolyte solution is removed by the outlet, in particular the overflow **5.**

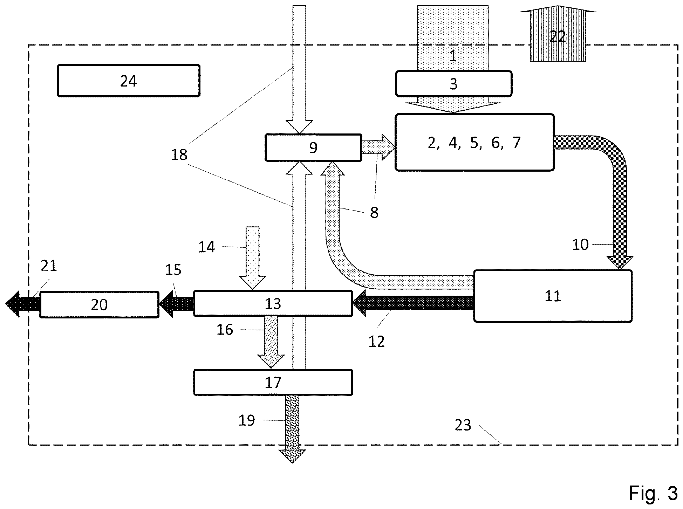

- **Fig. 3**: shows an automated, autonomously operational system according to the invention integrated in a housing **23:** The consumable, two-dimensional layered semiconductor or conductor material **1,** in particular graphite foil, is transported by the feeding system **3,** in particular mesh or belt, in the vessel for an electrolyte solution **2,** which includes an electrode pair consisting of at least a first and a second electrode **4,** an outlet **5,** in particular overflow, a sliding foil contact **6** and is connected to a power supply **7.** A flow of electrolyte is constantly entering the vessel, supplied by the electrolyte recycling **8** and electrolyte feeding system **9.** The mixture **10** of the electrochemically disintegrated semiconductor or conductor material and the adhering electrolyte are transported to a separation unit **11,** where the slurry of concentrated electrochemically disintegrated semiconductor or conductor material **12** and electrolyte **8** is separated. The concentrated electrochemically disintegrated semiconductor or conductor material is then transferred to a washing unit **13,** which, using clean water **14,** yields a purified electrochemically disintegrated semiconductor or conductor material **15** and waste water **16.** The waste water is processed in a waste-treatment unit **17** which feeds the cleaned water **18** back into the electrolyte recycling and feeding system **8,9** and discharges residual wastes **19.** The purified electrochemically disintegrated semiconductor or conductor material **15** is then fed into a processing unit **20,** which produces the processed electrochemically disintegrated semiconductor or conductor material **21.** The whole system in this example is installed in a housing **23,** equipped with various in- and outlets for the necessary raw-material, waste and product streams, including an exhaust **22** for process gases, and operated autonomously by a control unit **24.**

The system according to Fig. 1 and 2 enables a method for electrochemical disintegration of a consumable, two-dimensional layered semiconductor or conductor material, in particular graphite foil **1,** comprising the electrolytic exfoliation of the graphite foil in the electrolytic cell comprising an electrode pair **4** consisting of a first and a second electrode made of titanium, and a vessel for an electrolyte solution **2** (25 mM sulfuric acid solution), by bringing the second electrode and the graphite foil **1** into contact with the electrolyte solution and applying a voltage of 10 V between the first and second electrode using a power supply **7,** wherein the first electrode is in contact with the graphite foil **1** and is not in contact with the electrolyte solution, wherein the second electrode is a non-consumable counter electrode, which is arranged between the graphite foil **1,** wherein distance between the counter electrode and the graphite foil is about 5 cm, and at least one inner side of the vessel for the electrolyte solution, wherein the first electrode and the second electrode are connected to the power supply **7.** Afterwards, the graphite foil **1** is continuously or discontinuously, preferably semi-continuously, maintaining a constant current or about 10 cm/h, transported into the electrolyte solution using a feeding system 3, wherein the feeding system comprises two mesh-like, non-conductive belts made of polypropylene placed on both sides of the graphite foil, which is arranged in the vessel in such a way that its upper rollers are above the electrolyte solution and the lower part is immersed within the electrolyte solution. The disintegrated graphite foil particles (graphene agglomerates) are separated from the electrolyte solution using a filter, in particular the graphene on the surface of the electrolyte solution is removed from the system by the overflow and from the electrolyte solution by the filter. The electrolyte can be returned to the vessel, in particular to the inlet by at least one connecting element, e.g. a hose, after filtration. Alternatively, electrolyte can be re-dosed.

In a further example, the device further comprises a scraper at the bottom of the vessel, which scrapes the electrochemical disintegrated semiconductor or conductor material together.

### Cited non-patent literature

Chen C-H, Yang S-W, Chuang M-C, Woon W-Y, Su C-Y (2015) Towards the continuous production of high crystallinity graphene via electrochemical exfoliation with molecular in situ encapsulation. Nanoscale 7, 15362-15373.
Coleman JN (2013) Liquid Exfoliation of Defect-Free Graphene. Accounts of Chemical Research 46(1), 14-22.
Ejigu A, Kinloch IA, Dryfe RAW (2017) Single Stage Simultaneous Electrochemical Exfoliation and Functionalization of Graphene. ACS Applied Materials & Interfaces 9(1), 710-721. Gómez-Navarro C, Weitz RT, Bittner AM, Scolari M, Mews A, Burghard M, Kern K. (2007) Electronic transport properties of individual chemically reduced graphene oxide sheets. Nano Lett. 7(11), 3499-3503.
Hummers WS, Offeman RE (1958) Preparation of Graphitic Oxide. Journal of the American Chemical Society 80(6), 1339-1339.
Liu N, Luo F, Wu H, Liu Y, Zhang C, Chen J (2008) One-Step Ionic-Liquid-Assisted Electrochemical Synthesis of Ionic-Liquid-Functionalized Graphene Sheets Directly from Graphite. Adv. Funct. Mater. 18, 1518-1525.
Novoselov KS, Geim AK, Morozov SV, Jiang D, Zhang Y, Dubonos SV, Grigorieva IV, Firsov AA (2004) Electric Field Effect in Atomically Thin Carbon Films. Science 306, 666-669.
Rao KS, Sentilnathan J, Cho H-W, Wu J-J, Yoshimura M (2015) Soft Processing of Graphene Nanosheets by Glycine-Bisulfate Ionic-Complex-Assisted Electrochemical Exfoliation of Graphite for Reduction Catalysis. Adv. Funct. Mater. 25, 298-305.
Xia ZY, Pezzini S, Treossi E, Giambastiani G, Corticelli F, Morandi V, Zanelli A, Bellani V, Palermo V (2013) The Exfoliation of Graphene in Liquids by Electrochemical, Chemical, and Sonication-Assisted Techniques: A Nanoscale Study. Adv. Funct. Mater. 23, 4684-4693.

### List of reference signs

- 1: consumable, two-dimensional layered semiconductor or conductor material, in particular graphite foil
- 2: vessel for an electrolyte solution
- 3: feeding system to transport a consumable, two-dimensional layered semiconductor or conductor material into the electrolyte, in particular mesh or belt
- 4: electrode pair consisting of at least a first and a second electrode
- 5: outlet, in particular overflow
- 6: sliding foil contact
- 7: power supply
- 8: electrolyte recycling
- 9: electrolyte feeding system
- 10: mixture of electrolyte and disintegrated semiconductor or conductor material
- 11: separation unit
- 12: slurry of disintegrated semiconductor or conductor material
- 13: washing unit
- 14: water for washing
- 15: purified disintegrated semiconductor or conductor material
- 16: waste water
- 17: waste-treatment unit
- 18: cleaned water
- 19: waste discharge
- 20: processing unit
- 21: processed disintegrated semiconductor or conductor material
- 22: exhaust
- 23: housing
- 24: control unit

## Claims

1. A device for electrochemical disintegration of a consumable, two-dimensional layered semiconductor or conductor material (1) comprising:
i. at least one electrolytic cell comprising
- at least one electrode pair consisting of at least a first and a second electrode (4), and
- a vessel for an electrolyte solution (2),
ii. a power supply (7),
iii. a feeding system (3) to transport a consumable, two-dimensional layered semiconductor or conductor material into the electrolyte comprising at least one mesh and/or belt,
wherein the first electrode is in contact with the consumable, two-dimensional layered semiconductor or conductor material (1),
wherein the second electrode is a counter electrode, which is arranged between the consumable, two-dimensional layered semiconductor or conductor material (1) and at least one inner side of the vessel (2),
wherein the first electrode and the second electrode are connected to the power supply (7).

2. The device according to claim 1, wherein the first electrode is connected as anode to the power supply (7) and the second electrode is connected as cathode to the power supply (7).

3. The device according to claim 1 or 2, further comprising at least one unit for collecting and/or the separating (11) electrochemically disintegrated semiconductor or conductor material from the electrolyte solution.

4. The device according to claim 3, wherein collecting and/or separating unit (11) is selected from a filter, a centrifuge, a scraper, a pump and/or an air nozzle.

5. The device according to one of the claims 1 to 4, wherein the vessel for the electrolyte solution comprises at least one inlet and at least one outlet (5), wherein the outlet is connected to the inlet by at least one connecting element and
wherein a separating unit (11) is located between the outlet (5) and the inlet.

6. The device according to one of the claims 1 to 5, wherein at least one outlet of the vessel (5) is set up as an overflow and/or located at the side or bottom of the vessel (2).

7. The device according to one of the claims 1 to 6, wherein the feeding system (3) comprises at least two mesh-like, non-conductive belts placed on both sides of the consumable, two-dimensional layered semiconductor or conductor material (1),
which is arranged at least partially in the vessel (2) in such a way that it is at least partially surrounded by the electrolyte solution.

8. The device according to one of the claims 1 to 7, wherein the mesh or belt is made of polyethylene or polypropylene.

9. The device according to one of the claims 1 to 8, wherein the electrolytic cell comprises a further counter electrode, wherein the consumable, two-dimensional layered semiconductor or conductor material (1) is arranged between the two counter electrodes.

10. The device according to one of the claims 1 to 9 further comprising at least one cooling unit, wherein the cooling unit is arranged in or connected to the at least one first electrode, the at least one second electrode, the vessel for the electrolyte solution (2) and/or between the at least one inlet and at least one outlet of the vessel (5).

11. The device according to one of the claims 1 to 10 further comprising at least one sensor for monitoring at least one process parameter, preferably selected from temperature, conductivity, current, voltage and/or UV/Vis absorption.

12. A method for electrochemical disintegration of a consumable, two-dimensional layered semiconductor or conductor material comprising:
a) electrolytic exfoliation of a consumable, two-dimensional layered semiconductor or conductor material (1) in an electrolytic cell comprising
- at least one electrode pair consisting of at least a first and a second electrode (4), and
- a vessel for an electrolyte solution (2),
by bringing at least one second electrode and the consumable, two-dimensional layered semiconductor or conductor material (1) into contact with the electrolyte solution and applying a voltage between the at least one first and second electrode using a power supply (7),
wherein the first electrode is in contact with the consumable, two-dimensional layered semiconductor or conductor material (1),
wherein the second electrode is a counter electrode, which is arranged between the consumable, two-dimensional layered semiconductor or conductor material (1) and at least one inner side of the vessel for the electrolyte solution (2),
wherein the first electrode and the second electrode are connected to the power supply (7),
b) continuous or discontinuous transport of the consumable, two-dimensional layered semiconductor or conductor material (1) into the electrolyte solution using a feeding system (3) comprising at least one mesh and/or belt,
c) separating the disintegrated semiconductor or conductor material from the electrolyte solution.

13. The method according to claim 12, wherein the consumable, two-dimensional layered semiconductor or conductor material (1) is a carbon-based material, preferably selected from graphite, graphite derivatives, carbon-based semiconductor or conductor polymers.

14. The method according to claim 12 or 13, wherein the voltage in step a) is in the range of 1 V to 20 V and/or wherein the transport of the consumable, two-dimensional layered semiconductor or conductor material (1) into the electrolyte solution in step b) is carried out by applying a constant speed or a constant current
